# EUROPÄISCHE PATENTSCHRIFT

(11) **EP 1 062 411 B1**
(45) Veröffentlichungstag und Bekanntmachung des Hinweises auf die Patenterteilung: **29.05.2002**
(21) Anmeldenummer: 99907616.9
(22) Anmeldetag: 10.03.1999
(51) Int. Cl.: F01N 3/04, F01N 7/10, F01P 3/20

(54) **WASSERGEKÜHLTE ABGASLEITUNG**
EXHAUST GAS DUCT COOLED WITH WATER
CONDUITE POUR GAZ D'ECHAPPEMENT REFROIDIE PAR EAU

(30) Priorität: 12.03.1998 DE 19810726
(43) Veröffentlichungstag der Anmeldung: 27.12.2000
(73) Patentinhaber: DEUTZ Aktiengesellschaft, 51063 Köln (DE)
(72) Erfinder: KSCHISCHO, Albrecht, 68309 Mannheim (DE); RAPP, Manfred, 76698 Ubstadt-Weiher (DE)
(86) Internationale Anmeldenummer: EP9901528
(87) Internationale Veröffentlichungsnummer: WO9946489

(56) Entgegenhaltungen:
- DE-C- 831 035
- DE-C- 3 635 478
- DE-C- 4 206 247
- DE-U- 29 518 189

## Beschreibung

Die Erfindung betrifft eine Abgasleitung für eine Zylinderreihe einer Brennkraftmaschine, wobei ein Abgasführungskanal über einen Luftspaltraum von einem den Abgasführungskanal zumindest teilweise umgebenden kühlflüssigkeitsdurchströmten Gehäuse eingefasst ist, das entlang der Zylinderreihe geteilt ist.

Eine derartige Abgasleitung ist aus der DE-C 831 035 bekannt. Diese Abgasleitung weist ein Gehäuse auf, das entlang der Zylinderreihe teilbar ist. In das Gehäuse ist ein Abgasführungskanal eingesetzt. Weiterhin weist das Gehäuse Öffnungen auf, durch die der Abgasführungskanal durchgeführt ist und nur dieser ist an den Zylinderköpfen befestigt.

Aus der DE-C 36 35 478 ist eine Abgasleitung bekannt, die, bestehend aus Gehäuse und Abgasführungskanal, zunächst extern zusammengebaut und dann als gesamte Einheit an das Zylinderkurbelgehäuse der entsprechenden Brennkraftmaschine angebaut wird.

Die DE-U 295 18 189 beschreibt ein Abgaskrümmersystem, das keinen Gehäusegrundkörper als separates Bauteil aufweist, sondern dieser ist mit dem Zylinderkopf einstückig gebaut. Vorhanden ist nur ein einteiliger Deckel.

Der Erfindung liegt die Aufgabe zugrunde, eine Abgasleitung für eine Zylinderreihe einer Brennkraftmaschine bereitzustellen, die einen wartungsfreundlichen Aufbau aufweist.

Diese Aufgabe wird dadurch gelöst, dass das Gehäuse einen Gehäusegrundkörper, in den der Abgasführungskanal einsetzbar ist, und einen den Gehäusegrundkörper abdeckenden Gehäusedeckel aufweist, dass der Gehäusegrundkörper in Gehäusegrundkörperabschnitte sowie zumindest einen Gehäusegrundkörperendabschnitt und der Gehäusedeckel in Gehäusedeckelabschnitte aufgeteilt sind und dass die Gehäusegrundkörperabschnitte einer Anzahl Zylinder zugeordnet an diesen befestigbar sind und im Bereich der Abgasauslaßöffnung des jeweiligen Zylinderkopfs Öffnungen aufweisen und dass der Abgasführungskanal mit in die Öffnungen hineinragenden Flanschbereichen an den Zylinderköpfen gasdicht befestigbar ist. Dadurch ist ein modularer Aufbau der Abgasleitung geschaffen, der jederzeit ohne großen Aufwand beispielsweise eine Kontrolle insbesondere des Abgasführungskanals ermöglicht, indem der Gehäusedeckel demontiert wird. Dadurch kann der Luftspaltraum über die gesamte Länge des demontierten Gehäusedeckels inspiziert werden und beispielsweise auf eventuelle Undichtigkeiten beliebiger Art überprüft werden. Der Gehäusegrundkörper ist in - vorzugsweise eine bestimmte Anzahl von Zylindern umfassende, U-förmig ausgebildete - Gehäusegrundkörperabschnitte aufgeteilt. Dies können beispielsweise jeweils zwei Zylinder sein, so daß beispielsweise bei Ausbildung der Brennkraftmaschine als 8- oder 16-zylindrige Brennkraftmaschine in V-Bauweise identische Gehäusegrundkörperabschnitte für diese unterschiedlichen Brennkraftmaschinen zusammengesetzt werden können. Selbstverständlich ist es im Rahmen der Erfindung auch vorgesehen, beispielsweise zusätzlich Gehäusegrundkörperabschnitte für drei Zylinder vorzusehen, so daß auch andere Zylinderzahlen realisierbar sind. Zusätzlich zu diesen Gehäusegrundkörperabschnitten, die den einzelnen Zylindern zugeordnet werden, sind noch verschiedene Gehäusegrundkörperendabschnitte vorgesehen, die beispielsweise als Deckel und/oder Anbindeeinrichtungen für einen (flüssigkeitsgekühlten) Abgasturbolader ggf. unter Einbeziehung von Waste-Gate-Kanälen ausgebildet sein können. In entsprechender Ausgestaltung der Erfindung ist der Gehäusedeckel in ebenfalls einer Anzahl von Zylindern umfassende Gehäusedeckelabschnitte aufgeteilt. Hier gilt für diese Gehäusedeckelabschnitte entsprechend das zu den Gehäusegrundkörperabschnitten Gesagte. Die Gehäusegrundkörperabschnitte sind an den Zylinderköpfen befestigbar und weisen im , Bereich der Abgasauslaßöffnung des jeweiligen Zylinderkopfs Öffnungen auf. Dabei ist der Abgasführungskanal mit in die Öffnungen hineinragenden Flanschbereichen an den einzelnen Zylinderköpfen gasdicht befestigbar. Gemäß dieser Ausbildung werden also zunächst die Gehäusegrundkörperabschnitte montiert und anschließend der Abgasführungskanal in diese U-förmig ausgebildeten Gehäusegrundkörperabschnitte eingesetzt. Abschließend werden dann die Gehäusedeckelabschnitte montiert. Insbesondere dadurch, daß in Weiterbildung der Erfindung der Abgasführungskanal aus jedem Zylinder zugeordneten separaten Rohrabschnitten gebildet ist; kann darüber hinaus eine individuelle Montage oder insbesondere Demontage, beispielsweise zum Reparieren eines Zylinders, erfolgen. Hierbei ist selbstverständlich Voraussetzung, daß die Zylinder bzw. insbesondere die Zylinderköpfe einzeln oder entsprechend der Abschnitte der Gehäusegrundkörperabschnitte demontierbar sind.

In Weiterbildung der Erfindung weisen die Gehäusegrundkörperabschnitte im Bereich der beiden parallelen U-Schenkel durchgehende Kühlmittelführungskanäle auf. Diese Kühlmittelführungskanäle werden gemeinsam von Kühlflüssigkeit, insbesondere Kühlwasser durchströmt. Dabei fließt die Kühlflüssigkeit in beiden Kühlmittelführungskanälen entlang der Zylinderreihe in eine Richtung. Entsprechend sind die Gehäusegrundkörperendabschnitte so ausgebildet, daß an diese externe oder interne Kühlflüssigkeitsanschlüsse anschließbar sind und diese die Kühlflüssigkeit in die Kühlmittelführungskanäle verteilen. Dabei sind diese Kühlmittelführungskanäle in die Kühlflüssigkeitsführung vom Brennkraftmaschinenaustritt über den Abgasturbolader zu einem Plattenwärmetauscher eingeschaltet.

In weiterer Ausgestaltung der Erfindung ist in den Gehäusedeckel ebenfalls ein Kühlflüssigkeitskanal eingelassen. Dieser verbindet entlang einer Zylinderreihe A ein Thermostatgehäuse mit einem Ladeluftkühler und entlang der anderen Zylinderreihe B den Ladeluftkühler mit dem Plattenwärmetauscher. Diese Verbindungen waren bisher über separate außen an der Brennkraftmaschine anzubringende Rohrleitungen realisiert. Durch die Integration dieser Rohrleitungen in den Gehäusedeckel wird einerseits eine zusätzliche Kühlung des Abgasrohres erreicht und andererseits werden die bisher erforderlichen Rohrleitungen eingespart. Ebenfalls werden selbstverständlich die entsprechenden Anschlüsse, Schellen und Schlauchverbindungen, eingespart.

Weitere vorteilhafte Ausgestaltungen der Erfindung sind in der Zeichnungsbeschreibung dargestellt, in der ein in den Figuren dargestelltes Ausführungsbeispiel der Erfindung näher beschrieben ist.

Es zeigen:
- Fig. 1:: ein Gesamtschaltbild mit dem erfindungsgemäßen Gehäusegrundkörper und dem Gehäusedeckel und
- Fig. 2:: eine Detailansicht des Gehäusegrundkörpers, des Abgasrohres und des Gehäusedeckels.

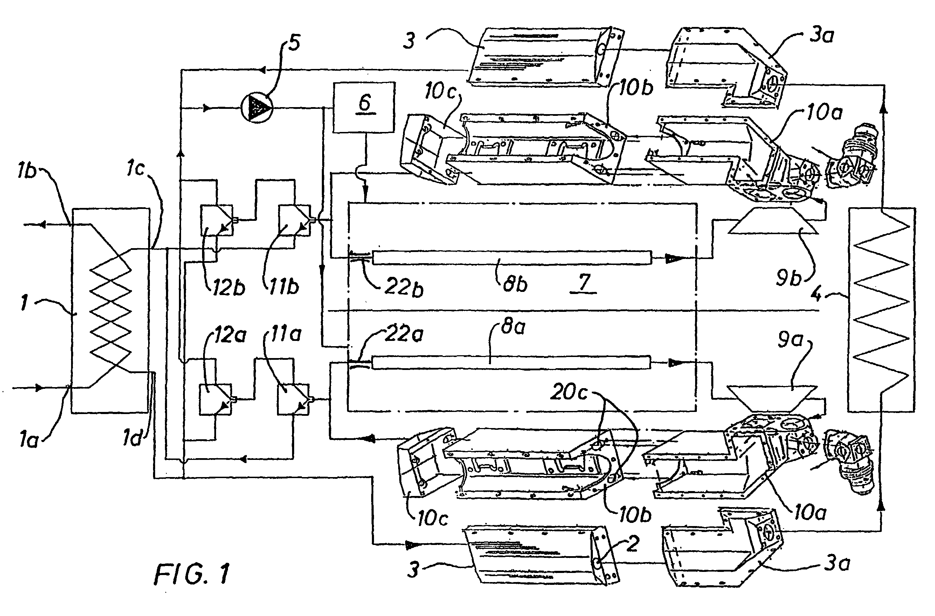

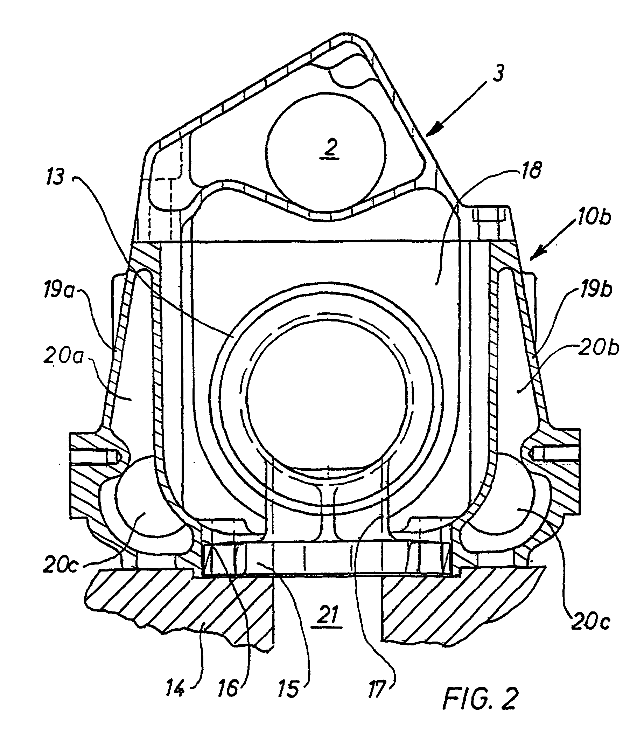

Das Gesamtschaltbild gemäß Fig. 1 zeigt den Kühlflüssigkeitskreislauf einer mehrzylindrigen V-Diesel-Brennkraftmaschine, die beispielsweise als Schiffsantrieb eingesetzt werden kann. In diesem Falle ist ein Plattenwärmetauscher 1 vorhanden, in den das Rohwasser über einen Eintritt 1a hineingelangt und über einen Austritt 1b wieder abgeführt wird. Entsprechend gelangt die Kühlflüssigkeit in Gegenstromrichtung über einen Eintritt 1c in den Plattenwärmetauscher 1 und über einen Austritt 1d wieder hinaus. Von dem Austritt 1d wird die Kühlflüssigkeit durch einen Kühlflüssigkeitskanal 2 (Fig. 2) in den Gehäusedeckelabschnitten 3, 3a einer Zylinderreihe zu einem Ladeluftkühler 4 geführt. Von dem Ladeluftkühler 4 gelangt die Kühlflüssigkeit auf der gegenüberliegenden Zylinderreihe der Brennkraftmaschine wieder in einen Gehäusedeckelabschnitt 3a und daran anschließend in einen Gehäusedeckelabschnitt 3. Von dort wird die Kühlflüssigkeit einer Kühlflüssigkeitspumpe 5 zugeführt, die einen Saugraum und zwei Druckräume aufweist. Von einem der Druckräume wird die Kühlflüssigkeit durch einen Ölkühler 6 in den Kühlkreislauf (Kühlmittelsammelleiste 8b) der Brennkraftmaschine 7 einleitet, während der zweite Druckraum die Kühlflüssigkeit direkt in einen weiteren Kühlkreislauf (Kühlmittelsammelleiste 8a) einleitet. Nach der Durchströmung der Brennkraftmaschine gelangt die Kühlflüssigkeit von den Kühlmittelsammelleisten 8a, 8b in jeweils einen flüssigkeitsgekühlten Abgasturbolader 9a, 9b, um von dort über Gehäusegrundkörperabschnitte 10a, 10b sowie Gehäusegrundkörperendabschnitte 10c wieder zurück auf der gegenüberliegenden Seite der Brennkraftmaschine in die Thermostatgehäuse 11a, 11b zu gelangen. Über Lochblenden 22a, 22b wird ein Teilstrom von der Kühlmittelsammelleiste 8a, 8b ebenfalls zu den Thermostatgehäusen 11a, 11b geleitet. Die Hauptmenge wird je nach Stellung von Hochtemperatur-Thermostaten in den Thermostatgehäusen 11a, 11b entweder in den Plattenwärmetauscher 1 oder in Niedrigtemperatur-Thermostate 12a, 12b geleitet. Diese Niedrigtemperatur-Thermostate 12a, 12b führen die Kühlflüssigkeit entweder der Kühlflüssigkeitspumpe 5 oder der Verbindung zwischen dem Austritt 1d und dem Gehäusedeckelabschnitt 3 zu. Die Gehäusegrundkörperabschnitte 40a, 10b, 10c und Gehäusedeckelabschnitte 3, 3a sind in die Einkreismischkühlung integriert und dienen hauptsächlich als Kühlmittelleitungen, die die bisherigen außenliegenden Rohrleitungen ersetzen.

In Fig. 2 ist eine Detailansicht des Gehäusegrundkörpers, des Abgasrohres und des Gehäusedeckels dargestellt. Der Gehäusegrundkörper ist im Bereich eines Gehäusegrundkörperabschnittes 10b geschnitten, der wiederum von einem Gehäusedeckelabschnitt 3 abgedeckt ist. In den Gehäusegrundkörperabschnitt 10 ist der Abgasführungskanal mit einzelnen je einem Zylinder zugeordneten Rohrabschnitten 13 eingesetzt. Dabei erfolgt die Montage derart, daß zunächst der Gehäusegrundkörperabschnitt 10b an einem andeutungsweise dargestellten Zylinderkopf 14 festgeschraubt wird. Danach werden die Rohrabschnitte 13 in diesen Gehäusegrundkörperabschnitte 10b eingesetzt und mit je einem Flanschbereich 15, der durch eine entsprechende Öffnung 16 in dem Gehäusegrundkörperabschnitt 10b hindurchreicht, ebenfalls mit dem Zylinderkopf 14 verschraubt. Dabei stellen Rohrstutzen 17 die gasdichte Verbindung zwischen dem Inneren der Rohrabschnitte 13 und der Abgasauslaßöffnung 21 des jeweiligen Zylinderkopfs 14 her. Diese Rohrabschnitte 13 sind im übrigen als sogenannte Pearl-Elemente ausgebildet.

Die Rohrabschnitte 13 sind in dem Gehäusegrundkörperabschnitt 10b unter Bildung eines Luftspaltraumes 18 eingesetzt. Der Gehäusegrundkörperabschnitt 10b ist U-förmig ausgebildet und weist entlang der beiden parallelen U-Schenkel 19a, 19b Kühlmittelführungskanäle 20a, 20b auf. Im Bereich der Endbereiche der Gehäusegrundkörperabschnitte 10b verengen sich die Kühlmittelführungskanäle 20a, 20b zu angenähert kreisrunden Kühlmittelführungskanaldurchlässen 20c.

In den Gehäusedeckelabschnitt 3 ist ein Kühlflüssigkeitskanal 2 eingelassen, der entlang des Gehäusedeckelabschnittes 3 den gesamten Innenraum ausfüllt und nur im Bereich der gegenüberliegenden Endstücke auf eine angenähert kreisrunde Öffnung verringert ist. Befestigt wird der Gehäusedeckelabschnitt 3 mittels Schrauben an dem Gehäusegrundkörperabschnitt 10b.

## Patentansprüche

1. Abgasleitung für eine Zylinderreihe einer Brennkraftmaschine, wobei ein Abgasführungskanal über einen Luftspaltraum von einem den Abgasführungskanal (13) zumindest teilweise umgebenden kühlflüssigkeitsdurchströmten Gehäuse eingefasst ist, das entlang der Zylinderreihe geteilt ist, dass das Gehäuse einen Gehäusegrundkörper, in den der Abgasführungskanal (13) einsetzbar ist, und einen den Gehäusegrundkörper abdeckenden Gehäusedeckel aufweist, dass der Gehäusegrundkörper in Gehäusegrundkörperabschnitte (10a, 10b, 10c) und der Gehäusedeckel in Gehäusedeckelabschnitte (3, 3a) aufgeteilt sind und dass die Gehäusegrundkörperabschnitte (10a, 10b, 10c) einer Anzahl Zylinderköpfe (14) zugeordnet sind, **dadurch gekennzeichnet, dass** die Gehäusegrundkörperabschnitte (10b) jeweils an den Zylinderköpfen (14) befestigt sind und die Gehäusegrundkörperabschnitte (10a, 10c) jeweils an einem Gehäusegrundkörperabschnitt (10b) befestigbar sind und im Bereich der Abgasauslassöffnung (21) des jeweiligen Zylinderkopfs (14) Öffnungen (16) aufweisen und dass der Abgasführungskanal (13) mit in die Öffnungen (16) hineinragenden Flanschbereichen (15) an den Zylinderköpfen (14) gasdicht befestigbar ist.

2. Abgasleitung nach Anspruch 1,
**dadurch gekennzeichnet, dass** der Abgasführungskanal aus jedem Zylinderkopf (14) zugeordneten separaten Rohrabschnitten (13) gebildet ist.

3. Abgasleitung nach einem der vorherigen Ansprüche,
**dadurch gekennzeichnet, dass** die Gehäusegrundkörperabschnitte (10a, 10b) im Bereich zweier paralleler U-Schenkel (19a, 19b) durchgehende Kühlmittelführungskanäle (20a, 20b) aufweisen.

4. Abgasleitung nach Anspruch 3,
**dadurch gekennzeichnet, dass** die Kühlmittelführungskanäle (20a, 20b) gemeinsam von Kühlflüssigkeit durchströmt werden.

5. Abgasleitung nach einem der vorherigen Ansprüche,
**dadurch gekennzeichnet, dass** in den Gehäusedeckel ein Kühlflüssigkeitskanal (2) eingelassen ist.

6. Abgasleitung nach Anspruch 5,
**dadurch gekennzeichnet, dass** der Kühlflüssigkeitskanal (2) unabhängig von den Kühlmittelführungskanälen (20a, 20b) mit Kühlflüssigkeit durchströmt wird.

## Claims

1. An exhaust gas conduit for a cylinder bank in an internal combustion engine, in which an exhaust guide channel (13) is surrounded, via an air duct space, by a housing having cooling liquid flowing through it and at least partially enclosing the exhaust guide channel (13), and segmented along the cylinder bank, the housing comprising a housing base unit into which the exhaust guide channel (13) may be set, and comprising a housing cover covering the housing base unit, the housing base unit being divided into housing base unit sections (10a, 10b, 10c) and the housing cover being divided into housing cover sections (3, 3a), and the housing base unit sections (10a, 10b, 10c) being assigned to a number of cylinder heads (14), **characterised in that** the respective housing base unit sections (10b) are attached to the cylinder heads (14) and the respective housing base unit sections (10a, 10c) may be attached to a housing base unit section (10b) and have openings (16) in the region of the exhaust discharge opening (21) of the respective cylinder head (14) and that the exhaust guide channel (13) may be attached in gas-tight manner to the cylinder heads (14) with flange regions (15) projecting into the openings (16).

2. An exhaust gas conduit according to Claim 1, **characterised in that** the exhaust guide channel is formed by separate pipe sections (13) from each cylinder head (14).

3. An exhaust gas conduit according to one of the previous claims, **characterised in that** the housing base unit sections (10a, 10b) have continuous coolant guide channels (20a, 20b) in the region of two parallel U-limbs (19a, 19b).

4. An exhaust gas conduit according to Claim 3, **characterised in that** the coolant guide channels (20a, 20b) jointly have cooling liquid flowing through them.

5. An exhaust gas conduit according to one of the previous claims, **characterised in that** a coolant channel (2) is set into the housing cover.

6. An exhaust gas conduit according to Claim 5, **characterised in that** the coolant channel (2) has cooling liquid flowing through it independently of the coolant guide channels (20a, 20b).

## Revendications

1. Tubulure d'échappement pour une rangée de cylindres d'un moteur à combustion interne, dont
un canal de guidage de gaz d'échappement (13) est entouré au moins partiellement par un boîtier parcouru par du liquide de refroidissement, ce boîtier étant divisé le long de la rangée des cylindres
le boîtier comprend un corps de base qui reçoit le canal de guidage des gaz d'échappement et un couvercle recouvrant le corps de base,
le corps de base est subdivisé en segments (10a 10b 10c) et le couvercle du boîtier, en segments de couvercle (3, 3a), et
les segments de corps de base (10a 10b 10c) sont associés à un nombre de culasses,
**caractérisée en ce que**
les segments de corps de base de boîtier (10b) se fixent chaque fois à une culasse (14) et les segments de corps de base (10a, 10c) sont fixés chaque fois à un segment de corps de base (10b), et la zone de l'ouverture (21) de sortie des gaz d'échappement de la culasse respective (14), a des ouvertures (16) et
le canal de guidage des gaz d'échappement (13) est fixé avec des zones de brides (15) pénétrant dans les ouvertures (16) de manière étanche sur les culasses (14).

2. Tubulure d'échappement selon la revendication 1,
**caractérisée en ce que**
le canal de guidage de gaz est formé par un segment de tube distinct (13) associé à chaque culasse (14).

3. Tubulure d'échappement selon l'une quelconque des revendications précédentes,
**caractérisée en ce que**
les segments de corps de base de boîtier (10a, 10b) possèdent, au niveau de deux branches en U parallèles (19a, 19b), des canaux de guidage de liquide de refroidissement (20a, 20b), continus.

4. Tubulure d'échappement selon la revendication 3,
**caractérisée en ce que**
les canaux de guidage de fluide de refroidissement (20a, 20b) sont traversés en commun par le fluide de refroidissement.

5. Tubulure d'échappement selon l'une quelconque des revendications précédentes,
**caractérisée en ce qu'**
un canal de fluide de refroidissement (2) est intégré dans le couvercle du boîtier.

6. Tubulure d'échappement selon la revendication 5,
**caractérisée en ce que**
le canal de liquide de refroidissement (2) est traversé par du fluide de refroidissement indépendamment des canaux de guidage de fluide de refroidissement (20a, 20b).
